Europäisches Patentamt

European Patent Office

Office européen des brevets

(11) Publication number: **0 005 078**
**A1**

# EUROPEAN PATENT APPLICATION

(21) Application number: **79300696.6**

(22) Date of filing: **25.04.79**

(51) Int. Cl.²: **H 02 K 29/02**
**G 05 D 3/00**

(30) Priority: **26.04.78 GB 1647978**

(43) Date of publication of application:
**31.10.79 Bulletin 79/22**

(84) Designated Contracting States:
**BE DE FR NL SE**

(71) Applicant: **THE MARCONI COMPANY LIMITED**
**Marconi House New Street**
**Chelmsford Essex CM1 1PL(GB)**

(72) Inventor: **Dailey, Keith Richard**
**11 Marshall Close Cove**
**Farnborough, Hampshire(GB)**

(72) Inventor: **Stewart, Douglas Edward**
**2 Wharf Road**
**Frimley Green, Surrey(GB)**

(74) Representative: **Keppler, William Patrick**
**Central Patent Department The General Electric**
**Company Limited Hirst Research Centre**
**Wembley, Middlesex HA9 7PP(GB)**

(54) **Stepper motors.**

(57) A stepper motor having a permanent magnet rotor (5) and a number of pole windings (1-4) which can be energised successively. The rotor angular position is sensed by Hall effect devices or reed switches and each pole winding is energised in dependence upon the position of the rotor and, in particular, before the preceding pole winding position is reached by the rotor. Where reed switches are used as the position sensor they can also perform the pole switching function. Speed control is obtained by control of the pole energising current and is thus divorced from any control of the frequency of the pole energisation. Very high speeds at very low powers can be attained.

Fig. 1

EP 0 005 078 A1

0005078

This invention relates to stepper motors and particularly to stepper motors which are operable on a continuous basis to produce a large number of rotational steps. The stepper motor is essentially a position control device but the ability to rotate a load rapidly through large angles requiring many incremental steps is a common requirement.

One application of such motors is in instrumentation control in space vehicles and for this purpose durability, reliability and low power consumption are at a premium. Brush fed rotors are thus excluded and permanent magnet stepper motors have proved to be among the most satisfactory.

A permanent magnet stepper motor can be operated on a continuous basis in either of two modes : first, what may be called a frequency-driven, or synchronous mode, and secondly a switched mode. In the first case the stator poles are energised by a sinusoidal supply which, with a suitable phase shift from pole to pole will cause the rotor to rotate in synchronism. In the second case a D.C. source is connected to the stator pole windings cyclically so that at each switching of the D.C. source the rotor attempts to settle in the new stable position, to which the rotor is commanded or driven. Switching of the stator poles may be effected by a pulse train of square wave form.

In both cases the speed of rotation may be increased by increasing the energising frequency, sinusoidal or pulse. There comes a time, however, when the operation becomes unstable and the rotation drops out of synchronisation with the energisation. Even at speeds within the controlled range, operation tends to become unreliable as the speed increases.

An object of the present invention is to provide a stepper motor which operates with certainty throughout its range and permits greater speeds to be obtained than hitherto, without loss of synchronism.

A further object of the present invention is to provide means for adapting a completely standard stepper motor for reliable high speed operation.

According to the present invention, a stepper motor having a permanent magnet rotor and a stator having a plurality of pole windings, includes means for energising the pole windings cyclically to establish a succession of angular command positions for the rotor, said means for energising the pole windings being operative in dependence upon the angular position of the rotor so that, in operation, before the rotor has achieved any particular command position, the pole winding energisation is switched to establish the command position next following said particular command position.

The means for energising the pole windings preferably comprises means for sensing the rotor angular position and means for connecting the pole windings to a D.C. source selectively, the latter means being operative in dependence upon the position sensing means. The means for sensing the rotor angular position may comprise a magnetic angular reference element rotatable with said rotor, and field sensing elements fixed in relation to the motor stator and disposed around the reference element.

The reference element preferably comprises a permanent magnet and the field sensing elements may comprise Hall effect sensors.

There may be an even number of said command positions at equal angular spacings, both poles of the permanent magnet reference element being detectable and distinguishable by each Hall effect sensor, and the number of sensors being half the number of command positions.

The field sensing elements may, alternatively, comprise for each of the command positions, a reed switch. The field sensing elements may further comprise, for each of the command positions, a permanent magnet spaced from the associated reed switch but not sufficiently to prevent operation thereof, said magnetic reference element comprising a circular magnetic shunt which extends between each reed switch and its associated magnet to prevent operation of the reed switch, the magnetic shunt having a gap at one portion of its circumference such as to permit operation of each reed switch as the gap passes by it on rotation of the magnetic shunt.

The reed switches may therefore constitute both means for sensing the rotor angular position and means for connecting the pole windings.

Means may be provided for deriving a signal proportional to the average magnitude of the voltage induced in at least one of the unenergised pole windings during operation of the motor, this signal indicating the motor speed.

Two embodiments of stepper motor in accordance with the invention will now be described, by way of example, with reference to the accompanying drawings, of which:

Figure 1 is a partially schematic diagram of a stepper motor;

Figure 2 is a part sectional elevation of the first embodiment of stepper motor, showing a position sensing arrangement;

Figure 3 is an end elevation of this same embodiment;

Figure 4 is a diagram of part of a drive circuit for the first embodiment; and

Figure 5 is a diagrammatic perspective view of a position sensing arrangement for the second embodiment.

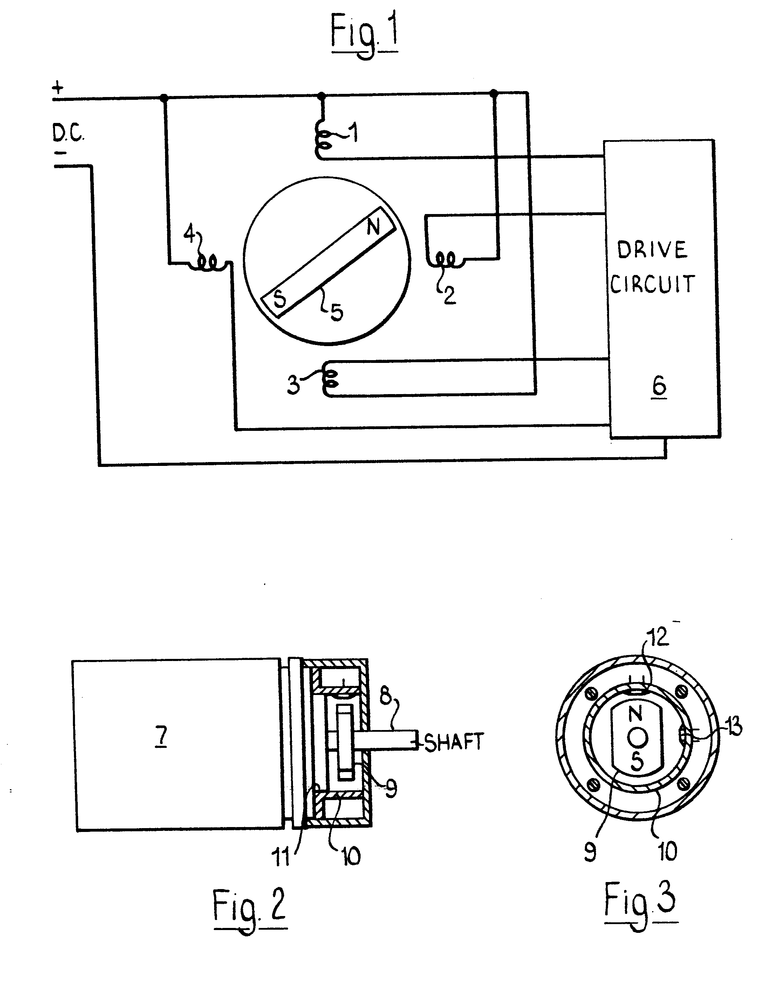

Referring now to Figures 1 to 4, Figure 1 shows a permanent magnet rotor 5 of a stepper motor having, simply, single north and south poles. In this embodiment there are four pole windings 1, 2, 3 and 4 each of which can be energised to produce the same polarity, a north pole, say, adjacent to the rotor. Thus, by energising the pole windings cyclically, the rotor south pole is attracted to each stator pole position in sequence and steps around, 90° at a time. Each stator pole position would thus constitute a stable position of the rotor if the associated pole winding were kept energised (alone). For continuous operation of the motor, i.e. through a number of steps, the positions to which the rotor is driven (or attracted) will not of course be stable rotor positions but may be considered as command positions while their associated stator pole windings are energised.

It would, of course, be possible to energise diametrically opposite pole windings simultaneously but with opposite polarity to enhance the driving force, but it will be seen that the control circuitry is greatly simplified by the 'unipolar' arrangement of the embodiment.

Other operating modes are also possible. The pole windings may be energised in pairs to produce command positions at points intermediate the pole windings. Then, by energising the windings alternately in pairs and singly, command positions at both the pole winding positions and the intermediate positions can be obtained. Basic steps of 45° would then be obtained compared to the 90° step of the illustrated embodiment. There is, however, a loss of efficiency with such compromise arrangements.

Reverting to the preferred arrangement, the pole windings 1-4 have a common point connected to one terminal of a D.C. source. The other connections of the pole windings are taken to a drive circuit 6 which connects them to the other D.C. terminal on a cyclic basis. It is, however, an essential feature of the invention that the energisation of the pole windings is synchronised inescapably with the rotor angular position. This is achieved as will be explained.

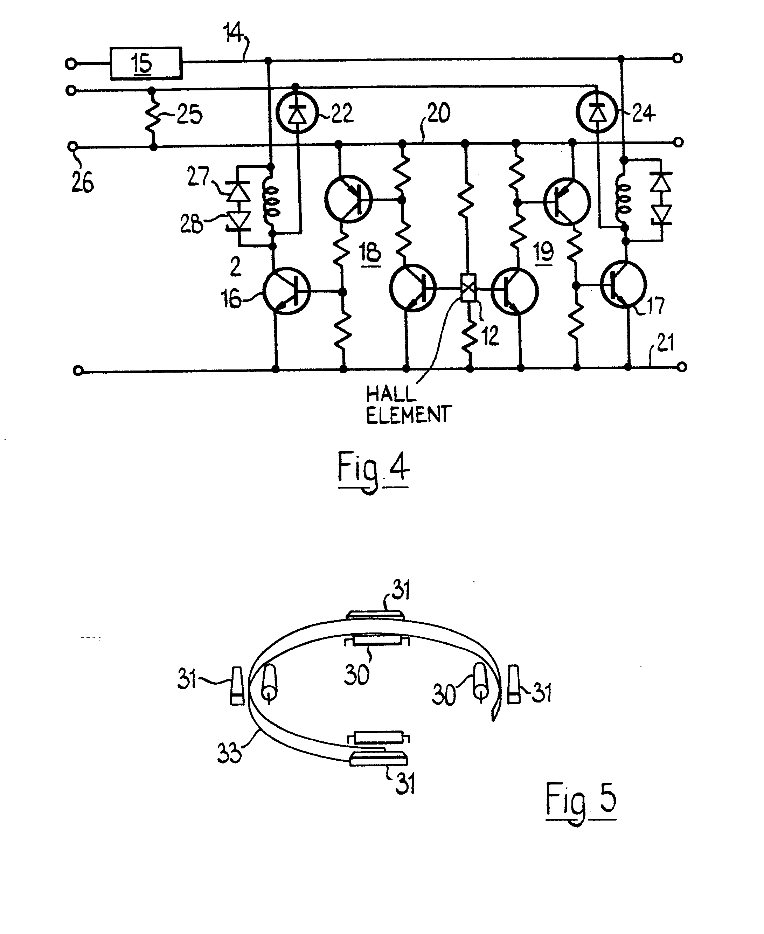

Figures 2 and 3 illustrate the means by which the rotor angular position is sensed. The motor 7 contains the rotor 5 and stator poles 1-4. The rotor is mounted on a shaft 8 which protrudes into the commutation section shown sectioned in Figure 2 and in end view in Figure 3. Mounted on the shaft 8 is a commutation magnet 9 the rotational position of which on the shaft is fixed. Conveniently it may be in alignment with the main motor rotor magnet 5, although this is not essential.

Surrounding the commutation magnet 9 is a commutation ring or collar 10 which sits snugly on a concentric shoulder 11 of the motor body. The collar 10 is then fixed, by screws for example, in the selected angular position. Alternatively, for a particular application the required angular position would be predetermined and dowel pins or other devices would locate the collar 10.

The collar 10 carries field sensing elements for sensing the angular position of the commutation magnet and thus of the main rotor 5. These field sensing elements in this embodiment comprise Hall effect elements 12 and 13 which are mounted at quadrature positions on the collar 10. Each Hall effect element has two output terminals between which an emf is produced in the presence of orthogonal current and magnetic field in the element. With a fixed current the emf is a measure of the field strength, and in addition, the direction of the emf varies with the field direction. Each Hall element can therefore indicate the proximity of a magnetic pole and its polarity. The two elements together can therefore indicate four $90^{\circ}$ step positions of the rotor.

The basic operation of the motor is that as each pole winding is energised the rotor 5 is driven around by one step the energisation being switched to the next pole winding to achieve the next step, and so on. It is essential to the invention that the switching is dictated by the rotor angular position and this is achieved by the angular position sensor arrangement of Figures 2 and 3 in conjunction with the drive circuit 6.

This is shown in detail in Figure 4, which shows the circuitry for the control of two pole windings 2 and 4 in response to signals from a single Hall effect field sensor 12.

A motor control voltage is applied to a line 14 by way of a current limiting resistor 15. The pole windings 2 and 4 are fed from this line 14 under the control of transistor switches 16 and 17 which are in turn controlled by respective amplifying circuits 18 and 19. When the Hall element output goes positive-to-negative left-to-right as shown in Figure 4, the input transistor of amplifier 18 is driven on while the input transistor of amplifier 19 is driven off. Consequently transistor 16 is switched 'on' and the pole winding 2 is energised. Transistor 17 is held off at the same time. When the opposite pole of the commutation magnet 9 approaches the Hall element 12 the opposite effect occurs and pole winding 4 is energised.

The energising current for the pole windings can clearly be controlled by control of the voltage on line 14. However, a constant supply voltage is required for the amplifying circuits and this is obtained from a supply line 20.

The drive circuit for the other two pole windings is similar and is run off the same motor control line 14, supply line 20 and common line 21.

An important feature of the present embodiment is the means by which high speed operation is achieved. As explained previously, the angular position of the commutation ring 10 and the Hall elements carried on it, is adjustable. The basic arrangement would have the Hall elements 12 and 13 aligned with the main rotor magnet 5, so that switching occurred as the rotor acquired each command position. In accordance with the invention however, switching is required to occur from one command position to the next before the rotor has reached the first one. Thus, to a certain extent the arrangement is comparable with a spark-ignition I.C. engine, in which firing occurs before top-dead-centre has been reached. There is a difference however, in that in this motor, 'firing' of the pole winding in advance of the preceding command position produces no resistance or back reaction from the adjacent pole winding which becomes effectively non-existent.

It has been found that the greatest improvement in efficiency occurs when the advance is in the region of $45°$, i.e. each pole winding is 'fired' to establish a command position $135°$ ahead of the rotor position at the time of 'firing'. This is effected by turning back the commutation collar 10 by $135°$ from the position in which the Hall element is aligned with the pole winding that it switches on. Very great increases in speed have been found to result.

Since the cyclic energisation of the poles is locked to the rotation of the rotor in the above described manner this clearly constitutes a major distinction from known continuous stepper motors in which the speed is directly determined by the, independently controlled, frequency of the energising supply. As mentioned above the speed control function is then taken over by the controlled-voltage D.C. supply connected to the line 14.

It will commonly be desirable at least to have a fairly sensitive indication of the motor speed, and preferably to incorporate the line 14 input and a speed output signal in a closed loop control system. This can be done in conventional manner by comparing the speed output signal with a preset reference value, providing an error signal in accordance with the difference and employing the error signal to control the level of the voltage applied to the line 14. The speed indication is achieved in a simple and efficient way by picking off the voltages induced in the pole windings as the rotor magnet 5 rotates. Referring to Figure 4, a respective diode rectifier 22, 24 is connected to each pole winding to pick off the voltage induced when the winding is not energised by way of transistor 16 or 17. The resultant voltage pulses from each pole winding are added by way of a common resistor 25 the average voltage across which is then proportional to the speed of the motor.

A diode 27 effectively connected between the emitter and collector of transistor 16 provides protection against the back emf spike that arises on the energised pole windings. However it would also suppress the back emf used for speed indication, when the winding is not energised. A zener diode 28 is therefore placed in series with the protection diode so that a back emf up to the zener voltage is available for speed indication.

While the Hall element angular position sensor permits very high motor speeds and simplifies the electronics on account of its bi-directional output, other field sensing devices can be used in certain applications. Thus Figure 5 shows a reed switch arrangement in which four reed switches 30 are arranged at quadrature positions around the motor shaft, each being adjacent a small bar magnet 31 which although spaced from t is sufficiently close to operate the reed switch in the absence of any diverting medium. A magnetic shunt element 3 in the form of a circular strip with a gap at one part of its circumference, is mounted on the rotor shaft (not shown) to extend between the reed switches and the associated magnets. While a reed switch is thus separated from its associated magnet by the shunt element 33, its contacts remain open. Each reed switch is connected directly in series with the respective pole winding so that only the reed switch which is adjacent the gap in the shunt element is closed to energise the associated pole winding.

As in the first embodiment the reed switch/magnet assembly is set at an angular position such as to select one stable position before the preceding one has been reached.

Such a reed switch commutation arrangement provides both position sensing and pole switching and is therefore attractive on account of its simplicity. However, because of the mechanical contacts in this scheme, the life is limited by the number of switch contact operations. Although, therefore, the possible operational speed is basically comparable with that obtainable from the Hall effect arrangement, it has to be traded off against operational life.

Other position sensing arrangements may be employed, for example photo-optical, capacitive, inductive systems, but subject to its life limitation the above reed switch system provides one of the simplest.

It will be appreciated that one of the main advantages of the embodiments described is that the actual stepper motor construction is quite standard, the invention consisting in the addition of control components. The position sensing arrangement is merely fitted to the shaft and motor body, and the drive circuit replaces the existing drive circuit.

## CLAIMS

1. A stepper motor having a permanent magnet rotor (5) and a stator having a plurality of pole windings (1-4), and including means (6) for energising the pole windings (1-4) cyclically to establish a succession of angular command positions for the rotor, characterised in that said means for energising the pole windings (1-4) is operative in dependence upon the angular position of the rotor (5) so that, in operation, before the rotor (5) has achieved any particular command position, the pole winding energisation is switched to establish the command position next following said particular command position.

2. A stepper motor according to Claim 1, characterised in that said means for energising the pole windings (1-4) comprises means for sensing the rotor angular position and means (6, 30) for connecting the pole windings (1-4) to a D.C. source selectively, the latter means (6, 30) being operative in dependence upon the position sensing means.

3. A stepper motor according to Claim 2, characterised in that said means for sensing the rotor angular position comprises a magnetic angular reference element (9, 33) rotatable with said rotor (5) and field sensing elements (12, 30) fixed in relation to the motor stator and disposed around the reference element (9, 33).

4. A stepper motor according to Claim 3, characterised in that said reference element comprises a permanent magnet (9) and said field sensing elements comprise Hall effect sensors (12, 13).

5. A stepper motor according to Claim 4, characterised in that there are an even number of said command positions at equal angular spacings, and wherein both poles of the permanent magnet reference element (9) are detectable and distinguishable by each Hall effect sensor (12, 13), the number of which sensors is half the number of command positions.

-12- 0005078

6. A stepper motor according to Claim 3, characterised in that said field sensing elements comprise for each of said command positions, a reed switch 30.

7. A stepper motor according to Claim 6, characterised in that said field sensing elements (30) further comprise for each of said command positions, a permanent magnet (31) spaced from the associated reed switch (30) but not sufficiently to prevent operation thereof, and in that said magnetic reference element comprises a circular magnetic shunt (33) which extends between each reed switch (30) and its associated magnet (31) to prevent operation of the reed switch (30), the magnetic shunt (33) having a gap at one portion of its circumference such as to permit operation of each reed switch (30) as the gap passes by it on rotation of the magnetic shunt (33).

8. A stepper motor according to Claim 6 or Claim 7 wherein said reed switches (30) constitute both means for sensing the rotor angular position and means for connecting the pole windings (1-4).

9. A stepper motor according to any preceding claim, characterised by means for deriving a signal proportional to the average magnitude of the voltage induced in at least one of the unenergised pole windings (1-4) during operation of the motor, said signal indicating the motor speed.

10. A stepper motor comprises a permanent magnet rotor (5) a stator having a plurality of pole windings (1-4), means (6) for energising said pole windings cyclically to establish a succession of angular command position for the rotor, said means for energising said pole windings being operative in dependence upon the angular position of the rotor and the motor speed being determined by the level but not the frequency of the energisation of said pole windings.

## Fig. 1

DRIVE CIRCUIT

## Fig. 2

SHAFT

## Fig. 3

HALL
ELEMENT

Fig. 4

Fig. 5

European Patent Office

**EUROPEAN SEARCH REPORT**

0005078
Application number

EP 79 30 0696

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | <u>FR - A - 1 388 848</u> (C.S.F.)<br>  * Page 2, left-hand column, lines 1-56; page 2, right-hand column lines 1-51; page 3, left-hand column, lines 1-5; page 3, right-hand column, lines 4-32; figures 1,3 *<br>-- | 1-5 | H 02 K 29/02<br>G 05 D  3/00 |
| | <u>US - A - 3 165 685</u> (MANTEUFFEL et al.)<br>  * Column 4, lines 4-75; column 5, lines 1-13; column 6, lines 47-65; figures 1-2d *<br>-- | 1-5,10 | TECHNICAL FIELDS SEARCHED (Int.Cl.³) |
| | <u>US - A - 3 210 631</u> (NICCOLLS)<br>  * Column 1, lines 57-61; column 2, lines 3-72; column 3, lines 1-50; column 4, lines 25-41; figures 1-2d *<br>-- | 1-5 | H 02 K 29/02<br>        29/00<br>        29/04<br>H 02 K 25/00 |
| | <u>US - A - 3 634 873</u> (NISHIMURA)<br>  * Column 3, lines 68-75; column 4, lines 1-75; column 5, lines 1-14; figures 1-9 *<br>-- | 6,7 | |
| | <u>US - A - 2 558 540</u> (CLOS)<br>  * Column 1, lines 13-55; column 2, lines 1-50; figures 1-4 *<br>-- | 6,8 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | <u>US - A - 3 688 172</u> (SIEBER et al.)<br>  * Column 1, lines 37-57; column 3, lines 46-68; column 4, lines 1-25; figure *<br>---- | 9 | &: member of the same patent family, corresponding document |

The present search report has been drawn up for all claims

| Place of search | Date of completion of the search | Examiner |
|---|---|---|
| The Hague | 18-06-1979 | TIO |

EPO Form 1503.1   06.78